# EUROPÄISCHE PATENTANMELDUNG

(11) **EP 1 486 152 A1**
(43) Veröffentlichungstag der Anmeldung: **15.12.2004**
(21) Anmeldenummer: 04013905.7
(22) Anmeldetag: 14.06.2004
(51) Int. Cl.: A47J 37/06

(54) **Elektrisches Tischraclettegerät**

(30) Priorität: 13.06.2003 DE 20309176 U
(71) Anmelder: Sino Electric Industries Company Limited, Kwun Tong, Kowloon (CN)
(72) Erfinder: Buesching, Jan c/o Sino Electric Ind.Comp.Limited, 57 Hung to Road Kwun Tong Kowloon (HK)
(74) Vertreter: Reitstötter - Kinzebach & Partner (GbR)

(57) **Zusammenfassung**

Die Erfindung betrifft ein elektrisches Tischraclettegerät mit einem Gestell (11), welches eine Heizeinrichtung (12), eine unter der Heizeinrichtung angeordnete erste Platte (13) zur Aufnahme von Pfännchen (14) und eine unter der ersten Platte (13) angeordnete zweite Platte (15) zur Aufnahme von Pfännchen (14) trägt, wobei das Tischraclettegerät dadurch gekennzeichnet ist, dass die beiden Platten (13,15) lösbar mit dem Gestell (11) verbunden sind.

## Beschreibung

Die Erfindung betrifft ein elektrisches Tischraclettegerät mit einem Gestell, welches eine Heizeinrichtung, eine unter der Heizeinrichtung angeordnete erste Platte zur Aufnahme von Pfännchen und eine unter der ersten Platte angeordnete zweite Platte aufweist, die ebenfalls zur Aufnahme von Pfännchen dient.

Ein derartiges Tischraclettegerät ist beispielsweise aus dem deutschen Gebrauchsmuster DE 91 16 362 U1 und dem deutschen Gebrauchsmuster DE 296 18 202 U1 bekannt. Bei diesen Tischraclettegeräten befindet sich eine erste Platte zum Abstellen von Pfännchen direkt unter der Heizeinrichtung und wird zum Erhitzen und Überbacken der in den Pfännchen befindlichen Nahrungsmittel, wie beispielsweise Raclette-Käsescheibchen, verwendet. Unter der ersten Platte, die sich direkt im Einwirkungsbereich der Heizeinrichtung befindet, ist eine zweite Platte angeordnet, die durch die erste Platte vor der Einwirkung der Wärmestrahlung der Heizeinrichtung geschützt ist. Die zweite Platte kann also dazu verwendet werden, nicht benutzte Raclettepfännchen abzustellen, wenn der Benutzer im Laufe des Essens entweder eine Pause einlegen oder andere Nahrungsmittel, wie etwa Fleisch, Salat oder andere Beilagen, die nicht in den Pfännchen zubereitet werden, zu sich nehmen will. Derartige Tischraclettegeräte weisen gegenüber herkömmlichen Geräten, die nur eine Platte zur Aufnahme der Pfännchen besitzen, den Vorteil auf, dass der Benutzer nicht gezwungen, heiße und teilweise mit Käse- und anderen Nahrungsmittelresten verschmutzten Pfännchen auf der Racletteplatte selbst oder auf dem Esstisch abzustellen. Im ersteren Fall erweist es sich nämlich als nachteilig, dass die Speisereste bei längerer Nichtbenutzung der Pfännchen unter der Einwirkung der von der Heizeinrichtung ausgehenden Wärme zunehmend verkohlen und in den Raclettepfännchen einbrennen können, was bei einer späteren Wiederbenutzung geschmacklich nachteilig ist und auch die Reinigung der Pfännchen erschwert. Auch der letztere Fall, bei der die Raclettepfännchen, gegebenenfalls auf einer geeigneten Unterlage, auf dem Esstisch abgestellt werden, ist mit Nachteilen behaftet, da die Platzverhältnisse auf dem Esstisch gerade beim Racletteessen im Allgemeinen sehr beengt sind, weil neben dem Tischraclettegerät zahlreiche weitere Schalen und Behälter für Käsescheiben, Beilagen, wie Kartoffeln, Pilze und häufig auch zusätzliche Fleischstückchen zum Grillen von Fleisch auf einer typischerweise mit dem Raclettegerät kombinierten Grillplatte vorhanden sind.

Die in den eingangs erwähnten Schutzrechten beschriebenen Tischraclettegeräte beheben diese Nachteile durch Bereitstellung eines Tischraclettegeräts, das unter der ersten Platte eine zweite Platte zur Aufnahme von Pfännchen aufweist. Die zweite Platte, die durch die erste Platte vor einer direkten Einwirkung der Heizeinrichtung geschützt ist, dient in erster Linie zur Aufnahme von nichtbenutzten Pfännchen.

Nachteilig an den bekannten Tischraclettegeräten ist jedoch, dass der Aufwand zur Reinigung des bei der Benutzung häufig stark verschmutzten Gerätes hoch ist, da häufig Essensreste und Fett- oder Ölrückstände aus sehr schwer zugänglichen Bereichen zwischen den Platten beziehungsweise zwischen der oberen Platte und der Heizeinrichtung entfernt werden müssen.

Der vorliegenden Erfindung liegt daher das technische Problem zu Grunde, ein Tischraclettegerät der eingangs beschriebenen Art bereitzustellen, das besonders einfach gereinigt werden kann.

Gelöst wird dieses technische Problem durch das Tischraclettegerät mit den Merkmalen des vorliegenden Anspruchs 1. Vorteilhafte Weiterbildungen des erfindungsgemäßen Tischraclettegeräts sind Gegenstand der abhängigen Ansprüche.

Die Erfindung betrifft demnach ein elektrisches Tischraclettegerät mit einem Gestell, welches eine Heizeinrichtung, eine unter der Heizeinrichtung angeordnete erste Platte zur Aufnahme von Pfännchen und eine unter der ersten Platte angeordnete zweite Platte zur Aufnahme von Pfännchen trägt, wobei das Tischraclettegerät dadurch gekennzeichnet ist, dass die beiden Platten lösbar mit dem Gestell verbunden sind.

Der Benutzer kann das erfindungsgemäße Tischraclettegerät zu dessen Reinigung daher mit wenigen Handgriffen zerlegen und die beiden Platten, sowie das Gestell und die Heizeinrichtung jeweils separat reinigen. Insbesondere die beiden Platten zur Aufnahme der Pfännchen sind vorteilhaft spülmaschinentauglich ausgebildet, so dass zumindest die Platten und gegebenenfalls auch das Gestell problemlos in einer herkömmlichen Spülmaschine gereinigt werden können. Die Heizeinrichtung, die üblicherweise mit einer Steuerungselektronik verbunden und daher nicht spülmaschinentauglich ist, kann im Bedarfsfall manuell gereinigt werden.

Ein weiterer Vorteil der Zerlegbarkeit des erfindungsgemäßen Tischraclettegeräts besteht darin, dass das Gerät im zerlegten Zustand nur sehr wenig Platz in Anspruch nimmt. Damit können die Transportkosten neuer Geräte aus dem Herstellerland zu den Händlern oder direkt zum Endverbraucher verringert werden. Da Tischraclettegräte beim Endverbraucher üblicherweise nur sehr unregelmäßig benutzt werden, profitiert auch dieser von der Zerlegbarkeit des Geräts, da es sich im zelegten Zustand sehr platzsparend lagern lässt. Dabei kann erfindungsgemäße Tischraclettegerät mit wenigen Handgriffen schnell und einfach zusammengebaut und wieder zerlegt werden.

Häufig weisen Tischraclettegeräte eine über der Heizeinrichtung angeordnete Grillplatte auf, so dass zusätzlich zur Raclettezubereitung auch Fleisch oder Gemüsebeilagen, wie beispielsweise Zucchini- oder Auberginenscheiben gegrillt werden können. Bei einer bevorzugten Variante des erfindungsgemäßen Tischraclettegeräts ist eine solche Grillplatte vorgesehen, die vorteilhaft ebenfalls lösbar mit dem Gestell verbunden ist.

Gemäß einer besonders bevorzugten Variante weist die Grillplatte zwei unterschiedliche Grillflächen auf, beispielsweise eine Fläche mit Rillen, über die Öl und Fett leicht ablaufen kann und eine glatte Grillfläche, wobei die Grillfläche so in das Gestell einbaubar ist, dass wahlweise eine der beiden Grillflächen nach oben gerichtet und mit Grillgut belegt werden kann. Vorzugsweise ist die Grillplatte aus Gusseisen hergestellt.

Gemäß einer vorteilhaften Variante des erfindungsgemäßen Tischraclettegeräts weist das Gestell zwei seitliche Säulen auf, welche die Heizeinrichtung und die Platten, also die beiden Platten zur Aufnahme von Pfännchen und die gegebenenfalls ebenfalls vorhandene Grillplatte, tragen.

Üblicherweise sind die Säulen fest mit dem Gestell verbunden und brauchen vom Benutzer zur Reinigung nicht demontiert werden. Es ist jedoch auch möglich, dass zumindest eine der Säulen oder beide Säulen lösbar mit dem Gestell verbunden sind.

Bevorzugt ist zumindest einer der mit dem Gestell verbundenen Säulen Gehäuseelement mit einer Steuereinrichtung für die Heizeinrichtung angeordnet. Der Benutzer kann so nicht nur die Platten des Tischraclettegeräts sondern auch die Heizeinrichtung schnell und problemlos vom Gestell lösen und separat reinigen.

Vorzugsweise trägt dabei das Gehäuseelement die Heizeinrichtung, die üblicherweise als Widerstandsheizung in Form einer Heizspirale ausgebildet ist.

Wenn eine Grillplatte vorgesehen ist, kann das Gestell des erfindungsgemäßen Tischraclettegeräts vorteilhaft einen herausnehmbarer Auffangbehälter für von der Grillplatte ablaufende Fluide, insbesondere also Öl und Fett, aufweisen. Dazu weist die Grillplatte zumindest für eine ihrer Grillflächen einen Ablauf auf, der in den Auffangbehälter mündet. Der Auffangbehälter selbst kann in einer Säule des Gestells angeordnet sein.

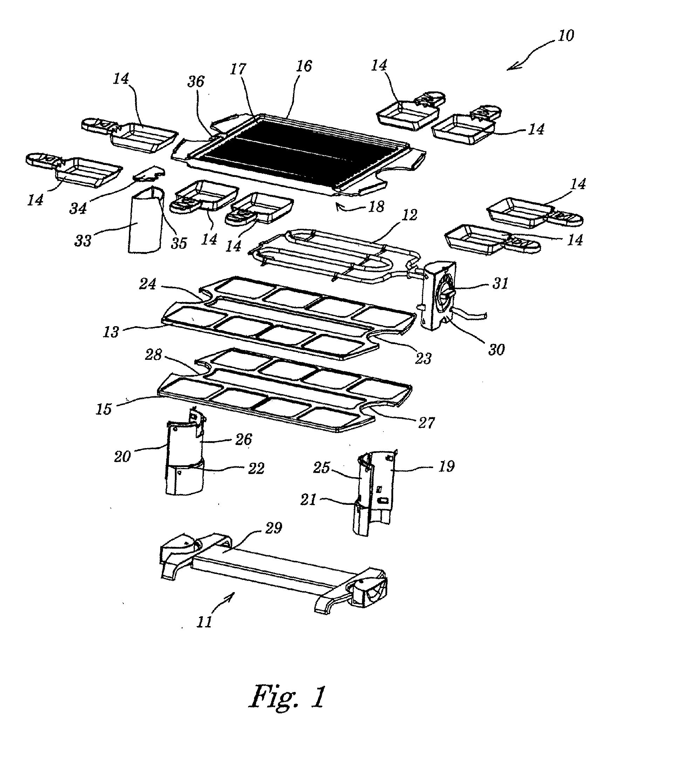

Die Erfindung wird im Folgenden unter Bezugnahme auf ein in der beigefügten Zeichnung dargestelltes bevorzugtes Ausführungsbeispiel näher erläutert. In der Zeichnung zeigt die Figur eine Explosionsdarstellung eines erfindungsgemäßen Tischraclettegeräts.

Das insgesamt mit der Bezugsziffer 10 bezeichnete Tischraclettegerät umfasst ein Gestell 11, welches eine Heizeinrichtung 12, eine unter der Heizeinrichtung angeordnete erste Platte 13 zur Aufnahme von Raclettepfännchen 14 und eine unter der ersten Platte angeordnete zweite Platte 15 trägt. Ferner weist das Tischraclettegerät eine Grillplatte 16 auf, die ebenfalls von dem Gestell 11 getragen wird. Die erste Platte 13 dient zur Aufnahme der Pfännchen 14, wenn in den Pfännchen angeordnete (in der Zeichnung nicht dargestellte) Lebensmittel erhitzt und insbesondere mit Raclettekäse überbacken werden sollen. Auf der zweiten Platte 15 werden die Pfännchen 14 abgestellt, wenn sie nicht benutzt werden. Auf der zweiten Platte sind die Pfännchen 14 gegenüber einer direkten Wärmebestrahlung durch die Heizeinrichtung 12 abgeschirmt.

Die Abstellplatten 13, 15 und die Grillplatte 16 sind lösbar mit dem Gestell 11 verbunden. Die Grillplatte 16 weist vorzugsweise zwei unterschiedliche Grillflächen 17, 18 auf und kann, je nachdem welche Grillfläche benutzt werden soll, aus dem Gestell 11 herausgehoben und gewendet werden.

Das Gestell 11 weist zwei seitliche Säulen 19, 20 auf, die im dargestellten Beispiel halbzylinderförmig ausgebildet sind. Die beiden Säulen 19, 20 weisen jeweils einen Vorsprung 21, 22 auf, auf welchem die erste Platte 13 aufliegt. Die erste Platte 13 weist dazu seitliche Ausschnitte 23, 24 auf, deren Innenradius größer als der Außenradius des oberen Teils 25, 26 der Säulen 19, 20 aber kleiner als der Außenradius des durch den Vorsprung 21, 22 definierten unteren Teils der Säulen 19, 20 ist. Dem gegenüber weist die zweite Platte 15 zwei seitliche Ausschnitte 27, 28 auf, deren Innenradius größer als der Außenradius des durch die Vorsprünge 21, 22 definierten Teils der Säulen 19, 20 ist, so dass die Platte 15 im Wesentlichen auf dem unteren Querträger 29 des Gestells 11 aufliegen kann. In die hohle, halbzylindrische Säule 19 wird ein komplementäres halbzylindrisches Element 30 eingesetzt, welches die Heizeinrichtung 12 trägt und in welchem die Steuerungseinrichtung 31 für die Heizeinrichtung vorgesehen ist. Das Element 30 mit der Heizeinrichtung 12 ist ebenfalls lösbar in der Säule 19 angeordnet und wird beispielsweise mit geeigneten Rastelementen 32 fixiert. Zum Zerlegen des Raclettegeräts kann der Benutzer das Element 30 mit der Heizeinrichtung 12 aus der Säule 19 herausheben und anschließend auch die Platten 13, 15 nach oben abheben. In der gegenüberliegenden Säule 20 ist ein im dargestellten Beispiel ebenfalls halbzylindrisch ausgebildetes herausnehmbares Gefäß 33 mit einem Deckel 34 angeordnet, das als Auffanggefäß für von der Grillplatte 16 ablaufendem Fett dient. Dazu weist das Auffanggefäß 33 eine Aussparung 35 auf, die im zusammengebauten Zustand des Tischraclettegeräts 10 mit einem seitlich an der Grillplatte 16 vorgesehenen Ablauf 36, kommuniziert. Da das Auffanggefäß 33 lösbar in der Säule 20 angeordnet ist, kann es vom Benutzer ebenfalls leicht herausgenommen, entleert und gegebenenfalls gereinigt werden.

## Patentansprüche

1. Elektrisches Tischraclettegerät mit einem Gestell (11), welches eine Heizeinrichtung (12), eine unter der Heizeinrichtung angeordnete erste Platte (13) zur Aufnahme von Pfännchen (14) und eine unter der ersten Platte (13) angeordnete zweite Platte (15) zur Aufnahme von Pfännchen (14) trägt,
**dadurch gekennzeichnet,**
**dass** die beiden Platten (13,15) lösbar mit dem Gestell (11) verbunden sind.

2. Elektrisches Tischraclettegerät gemäß Anspruch 1, **dadurch gekennzeichnet, dass** über der Heizeinrichtung (12) eine Grillplatte (16) angeordnet ist, die lösbar mit dem Gestell (11) verbunden ist.

3. Elektrisches Tischraclettegerät gemäß Anspruch 2, **dadurch gekennzeichnet, dass** die Grillplatte (16) zwei unterschiedliche Grillflächen (17,18) aufweist und so in das Gestell einbaubar ist, dass wahlweise eine der beiden Grillflächen (17) nach oben gerichtet ist.

4. Elektrisches Tischraclettegerät gemäß einem der Ansprüche 1 bis 3, **dadurch gekennzeichnet, dass** das Gestell (11) zwei seitliche Säulen (19,20) aufweist, welche die Heizeinrichtung (12) und die Platten (13,15,16) tragen.

5. Elektrisches Tischraclettegerät gemäß Anspruch 4, **dadurch gekennzeichnet, dass** die Säulen (19,20) lösbar mit dem Gestell (11) verbunden sind.

6. Elektrisches Tischraclettegerät gemäß einem der Ansprüche 4 oder 5, **dadurch gekennzeichnet, dass** in einer der Säulen (19) ein Gehäuseelement (30) mit einer Steuerungseinrichtung (31) für die Heizeinrichtung (12) angeordnet ist.

7. Elektrisches Tischraclettegerät gemäß Anspruch 6, **dadurch gekennzeichnet, dass** das Gehäuseelement (30) die Heizeinrichtung (12) trägt.

8. Elektrisches Tischraclettegerät gemäß einem der Ansprüche 2 bis 7, **dadurch gekennzeichnet, dass** das Gestell (11) einen herausnehmbarer Auffangbehälter (33) für von der Grillplatte (16) ablaufende Fluide aufweist.

9. Elektrisches Tischraclettegerät gemäß Anspruch 8, **dadurch gekennzeichnet, dass** die Grillplatte (16) einen Ablauf (36) aufweist, der in den Auffangbehälter (33) mündet.

10. Elektrisches Tischraclettegerät gemäß einem der Ansprüche 8 oder 10, **dadurch gekennzeichnet, dass** der Auffangbehälter (33) in einer Säule (20) des Gestells (11) angeordnet ist.
